# EUROPEAN PATENT APPLICATION

(11) **EP 1 739 564 A1**
(43) Date of publication of application: **03.01.2007**
(21) Application number: 05734669.4
(22) Date of filing: 21.04.2005
(51) Int. Cl.: G06F 12/14

(54) **IC CARD AND AUTHORITY TRANSFER CONTROL METHOD**

(30) Priority: 21.04.2004 JP 2004126046
(71) Applicant: NTT DoCoMo INC., Chiyoda-ku Tokyo 100-6150 (JP); Sakamura, Ken, Tokyo 141-0032 (JP); Koshizuka, Noboru, Musashino-shi, Tokyo 180-0013 (JP)
(72) Inventor: SAKAMURA, Ken, 1410032 (JP); KOSHIZUKA, Noboru, 1800013 (JP); ISHII, Kazuhiko, NTT DoCoMo, Inc., Chiyoda-ku, Tokyo 1006-150 (JP); TERADA, Masayuki, NTT DoCoMo, Inc., Chiyoda-ku, Tokyo 1006-150 (JP); MORI, Kensaku, NTT DoCoMo, Inc., Tokyo 1006150 (JP); HONGO, Sadayuki, NTT DoCoMo, Inc., Tokyo 1006150 (JP)
(74) Representative: GROSSE BOCKHORNI SCHUMACHER
(86) International application number: PCT/JP2005/007642
(87) International publication number: WO 2005/103911

(57) **Abstract**

An IC card (10) is provided with a file creator (16) for creating a voucher file (hereinafter referred to as "file"); an access control list setter (17) for setting an access authority to a created file; an authenticator (14) for performing mutual authentication with an authority recipient (authority recipient to which the whole or part of the access authority to the file has been transferred) and for examining authority transfer certificate data presented by the authority recipient; and an operation controller (15) for usually controlling an operation on the file on the basis of the set access authority and for, when the result of the examination of the authority transfer certificate data is normal, controlling the operation on the file by the authority recipient, based on the transfer content of the access authority indicated in the authority transfer certificate data, instead of the set access authority.

## Description

### Technical Field

The present invention relates to an IC card capable of setting an access authority transferable to another person, for a voucher file created inside, and to an authority transfer control method of the access authority.

### Background Art

A number of technologies have been proposed heretofore to utilize vouchers (also referred to as "electronic values") such as electronic tickets, electronic money, and electronic exchange coupons (e.g., reference is made to Patent Document 1 below). In such technologies, where an IC card communicates with ticket gates at stations, the tickets gates are devices physically different from each other, and thus vouchers of the same issuer have to be manipulated with the same access authority. Ticket vending machines are also devices physically different from each other, and thus vouchers of the same issuer have to be issued in communication between IC cards and ticket vending machines. Therefore, it can be contemplated that a common key is given to the ticket gates and ticket vending machines at the stations in order to enhance convenience of access to the ticket gates and ticket vending machines at the stations.
Patent Document 1 is Japanese Patent Application Laid-Open Gazette No. 2003-198541.

### Disclosure of the Invention

### Problem to be Solved by the Invention

However, in the case where the common key is given to the ticket gates and ticket vending machines at the stations, if the confidentiality with the common key is broken, it could be difficult to assure the security (safety) of the entire system.

As described above, it was difficult to enhance the convenience of access while maintaining the security.

The present invention has been accomplished in order to solve the above problem and an object of the invention is to provide an IC card and authority transfer control method capable of enhancing the convenience of access while maintaining the security.

### Means for Solving the Problem

In order to achieve the above object, an IC card according to the present invention comprises certificate issuing means for issuing authority transfer certificate data to indicate transfer of a whole or part of an access authority set to a voucher file, to a designated authority recipient; certificate retaining means for receiving and retaining authority transfer certificate data issued; certificate presenting means for presenting the authority transfer certificate data in mutual authentication with a party retaining a voucher file; examining means for, when authority transfer certificate data is presented, examining the presented authority transfer certificate data; and operation controlling means for, when a result of the examination of the authority transfer certificate data is normal, controlling an operation on the voucher file by the party having presented the authority transfer certificate data, based on a transfer content of an access authority indicated in the authority transfer certificate data.

The IC card of the above configuration is able to perform the characteristic operation of the present invention as a voucher issuer, as a voucher retainer (party retaining a voucher file), and as an authority recipient. Specifically, when the certificate issuing means of the IC card as a voucher issuer issues the authority transfer certificate data to indicate transfer of the whole or part of the access authority set for the voucher file, to the designated authority recipient, the certificate retaining means of the IC card as an authority recipient receives and retains the issued authority transfer certificate data. When the certificate presenting means of the authority recipient presents the authority transfer certificate data in mutual authentication with the IC card as a voucher retainer, the examining means of the voucher retainer examines the presented authority transfer certificate data. When the examination result of the authority transfer certificate data is normal, the operation controlling means of the voucher retainer controls the operation on the voucher file by the party having presented the authority transfer certificate data (i.e., by the authority recipient), based on the transfer content of the access authority indicated in the authority transfer certificate data.

In this manner, the authority recipient becomes able to perform the operation on the voucher file in accordance with the transfer content of the access authority indicated in the authority transfer certificate data. The voucher issuer is also able to allow the authority recipient to perform the operation on the voucher file in accordance with the transfer content of the access authority indicated in the authority transfer certificate data issued by itself.

By preliminarily setting the access authority for the voucher file in this manner, it becomes feasible to freely implement the authority transfer of the access authority to the voucher file while maintaining the security (safety) of the entire system, thereby improving the convenience of access.

In order to achieve the above object, another IC card according to the present invention comprises file creating means for, in response to a voucher file creation request from a communication partner, creating a voucher file while defining the communication partner as a voucher issuer; file access authority setting means for, in response to an access authority setting request from the voucher issuer, setting an access authority to the created voucher file; certificate issuing means for issuing authority transfer certificate data to indicate transfer of a whole or part of an access authority set in response to its own access authority setting request as a voucher issuer, to a designated authority recipient; certificate retaining means for receiving and retaining authority transfer certificate data issued by the voucher issuer, as an authority recipient; certificate presenting means for presenting the retained authority transfer certificate data, as the authority recipient, in mutual authentication with a voucher creator having created a voucher file; authenticating means for performing mutual authentication with an authority recipient, as a voucher creator, and for examining authority transfer certificate data presented by the authority recipient; and operation controlling means for controlling an operation on the voucher file, based on the set access authority to the voucher file, and for, when a result of the examination of the authority transfer certificate data is normal, controlling the operation on the voucher file by the authority recipient, based on a transfer content of an access authority indicated in the authority transfer certificate data, instead of the aforementioned set access authority.

An authority transfer control method according to the present invention comprises a file creating step wherein, in response to a voucher file creation request from a communication partner, an IC card as a voucher creator creates a voucher file in the IC card while defining the communication partner as a voucher issuer; a file access authority setting step wherein, in response to an access authority setting request from the voucher issuer, the voucher creator sets an access authority to the created voucher file; a certificate issuing step wherein the voucher issuer issues authority transfer certificate data to indicate transfer of a whole or part of the access authority set in response to its own access authority setting request, to a designated authority recipient; a certificate retaining step wherein the authority recipient receives and retains the issued authority transfer certificate data; a certificate presenting step wherein the authority recipient presents the retained authority transfer certificate data in mutual authentication with the voucher creator; a certificate examining step wherein the voucher creator examines the presented authority transfer certificate data in mutual authentication with the authority recipient; and an operation controlling step wherein, when a result of the examination of the authority transfer certificate data is normal, the voucher creator controls an operation on the voucher file of the voucher issuer by the authority recipient, based on a transfer content of the access authority indicated in the authority transfer certificate data, instead of the set access authority.

According to the invention as described above, the IC card as a voucher creator is able to create a voucher file in the IC card while defining the communication partner as a voucher issuer, in response to a voucher file creation request from the communication partner. The voucher creator is also able to set an access authority to the created voucher file, in response to an access authority setting request from the voucher issuer.

When, in a state in which a voucher file is created and in which an access authority is set for the voucher file, the voucher issuer issues the authority transfer certificate data to indicate transfer of the whole or part of the access authority set in response to an access authority setting request of its own, to a designated authority recipient, the authority recipient receives and retains the issued authority transfer certificate data. Then the authority recipient presents the retained authority transfer certificate data in mutual authentication with the voucher creator. The voucher creator, receiving the presentation of the authority transfer certificate data, examines the presented authority transfer certificate data in the mutual authentication with the authority recipient. When the examination result of the authority transfer certificate data is normal, the voucher creator controls the operation on the voucher file of the voucher issuer by the authority recipient, based on the transfer content of the access authority indicated in the authority transfer certificate data, instead of the set access authority. Namely, the authority recipient becomes able to perform the operation on the voucher file in accordance with the transfer content of the access authority indicated in the authority transfer certificate data, instead of the access authority preliminarily set for the voucher file. In addition, the voucher issuer also becomes able to allow the authority recipient to perform the operation on the voucher file in accordance with the transfer content of the access authority indicated in the authority transfer certificate data issued by itself.

When the access authority is preliminarily set for the voucher file in this manner, it becomes feasible to freely effect the authority transfer of the access authority to the voucher file while maintaining the security (safety) of the entire system, thereby improving the convenience of access.

An IC card according to the present invention is characterized by a configuration as a voucher creator, particularly, by a configuration of operation controlling means. Namely, another IC card according to the present invention comprises file creating means for, in response to a voucher file creation request from a communication partner, creating a voucher file while defining the communication partner as a voucher issuer; file access authority setting means for, in response to an access authority setting request from the voucher issuer, setting an access authority to the created voucher file; authenticating means for performing mutual authentication with an authority recipient (authority recipient to which the voucher issuer transferred a whole or part of the access authority to the voucher file) and for examining authority transfer certificate data to indicate a content of the transfer, presented by the authority recipient; and operation controlling means for controlling an operation on the voucher file, based on the set access authority to the voucher file, and for, when a result of the examination of the authority transfer certificate data is normal, controlling the operation on the voucher file by the authority recipient, based on the transfer content of the access authority indicated in the authority transfer certificate data, instead of the aforementioned set access authority.

The above-described operation controlling means usually controls the operation on the voucher file, based on the set access authority to the voucher file, and, when the examination result of the authority transfer certificate data by the authenticating means is normal, the operation controlling means controls the operation on the voucher file by the authority recipient, based on the transfer content of the access authority indicated in the authority transfer certificate data, instead of the set access authority. When the access authority is preliminarily set for the voucher file in this manner, it becomes feasible to freely perform the authority transfer of the access authority to the voucher file while maintaining the security (safety) of the entire system, thereby improving the convenience of access.

### Effect of the Invention

The present invention involves preliminarily setting the access authority to the voucher file so as to makes it feasible to freely perform the authority transfer of the access authority to the voucher file while maintaining the security (safety) of the entire system, thereby improving the convenience of access.

### Brief Description of the Drawings

Fig. 1 is a functional block diagram showing configurations of IC cards in an embodiment of the invention.
Fig. 2 is a diagram showing a configuration example of an access control list setter.
Fig. 3 is a diagram showing an example of an access control list of folders.
Fig. 4 is a diagram showing an example of an access control list of files in folder 1.
Fig. 5 is a diagram showing an example of authority transfer certificate data.
Fig. 6 is a chart diagram for explaining sequential processing about authority transfer control.

### Description of Reference Symbols

10 is for IC card; 11 is for certificate issuer; 12 is for certificate retainer; 12A is for authority transfer certificate data; 13 is for certificate presenter; 14 is for authenticator; 14A is for certificate examiner; 15 is for operation controller; 16 is for file creator; 17 is for access control list setter; 17A is for access control list of folders; 17B is for access control list of files.

### Best Mode for Carrying out the Invention

An embodiment of the IC card and authority transfer control method according to the present invention will be described below.

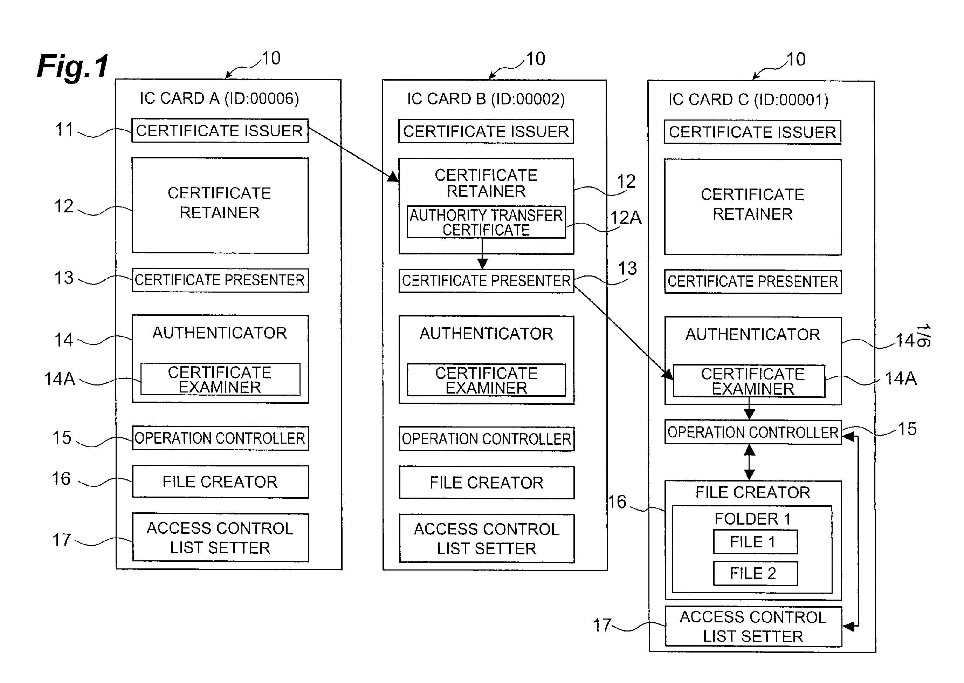

Fig. 1 is a functional block diagram showing configurations of three IC cards 10 (IC cards A-C) according to the present embodiment. As will be described later in detail, the present embodiment describes a processing example in which the IC card A operates as a voucher issuer, the IC card B as a voucher recipient, and the IC card C as a voucher creator. It is, however, noted that each IC card is provided with all the configurations necessary for operating as a voucher issuer, as a voucher recipient, and as a voucher creator.

Specifically, as shown in Fig. 1, each IC card 10 comprises file creator 16 for, in response to a voucher file creation request from a communication partner, creating and retaining a voucher file (hereinafter referred to simply as "file") while defining the communication partner as a voucher issuer; access control list setter 17 for, in response to an access authority setting request from the voucher issuer, setting and retaining an access authority to the created file, as an access control list described later; certificate issuer 11 for issuing authority transfer certificate data 12A to indicate transfer of the whole or part of an access authority set in response to an access authority setting request of its own as a voucher issuer, to a designated authority recipient; certificate retainer 12 for receiving and retaining authority transfer certificate data 12A issued by a voucher issuer; certificate presenter 13 for presenting the retained authority transfer certificate data 12A in mutual authentication with a voucher creator having created a file; authenticator 14 including certificate examiner 14A for examining authority transfer certificate data 12A presented by a communication partner as an authority recipient, and adapted to perform mutual authentication with a communication partner; and operation controller 15 for controlling an operation on the file on the basis of the set access authority and for, when the examination result of the authority transfer certificate data 12A is normal, controlling the operation on the file by the authority recipient, based on the transfer content of the access authority indicated in the authority transfer certificate data 12A, instead of the set access authority.

IC card 10 can be one of IC cards existing in the same configuration, and each IC card 10 is preliminarily assigned unique identification information (hereinafter referred to as "ID"). An ID certificate to certify the ID (not shown) is stored in the authenticator 14.

Each IC card 10 is able to create a new file. At this time, voucher issuer information (hereinafter referred to as "issuer ID") to identify who requested creation of the file is added to the created file.

When a new file is created in an IC card 10 as described above, the voucher issuer can put a restriction on access to the file (copy/assignment herein), e.g., on access from parties except for the voucher issuer. Namely, the voucher issuer is able to set an access control list of the file to control whether a party except for itself is allowed to execute copy/assignment of the file, upon creation of the file. Among the above access operations, copy corresponds to issue of a coupon ticket. Except for special cases, copy is set as "prohibited".

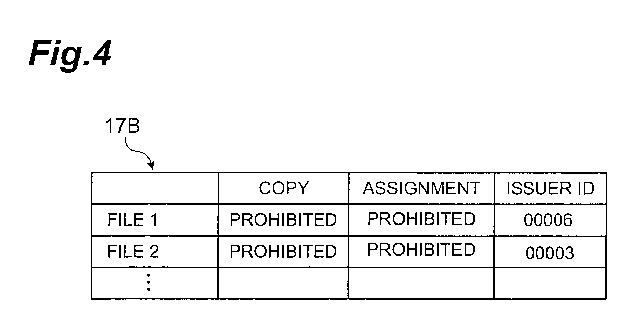

For example, as shown in Fig. 4, an access control list 17B of files stores information to indicate whether copy is permitted, information to indicate whether assignment is permitted, and issuer ID information, for each of file 1, file 2, and so on. This access control list 17B of files is set and retained by the access control list setter 17.

In the example of Fig. 1, in response to a voucher creation request and an access authority setting request from IC card A as a voucher issuer, IC card C creates and retains file 1, as a voucher creator, and sets and retains the access control list 17B of the file 1.

The IC card C can put a restriction on creation/reading/assignment of a file by another IC card relative to the IC card C. At this time, the IC card C can set a folder containing at least one file retained by itself, and set for the set folder, an access control list to control whether another IC card is allowed to perform creation/reading/assignment of each file in the folder. Among the above access operations, creation corresponds, for example, to inheritance of a voucher, and reading to balance inquiry of a voucher.

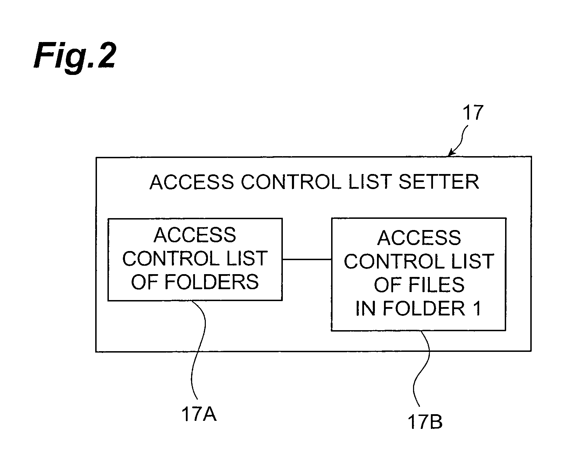

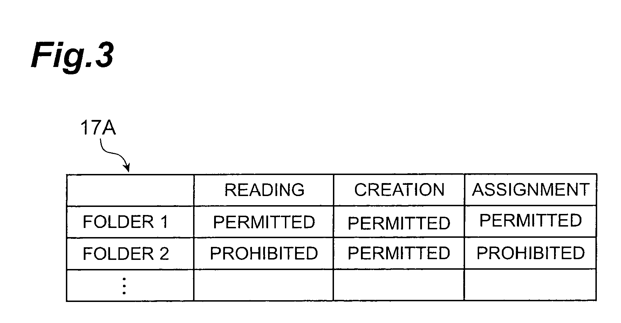

For example, as shown in Fig. 3, an access control list 17A of folders stores information to indicate whether reading is permitted, information to indicate whether creation is permitted, and information to indicate whether assignment is permitted, for each of folder 1, folder 2, and so on. The access control list 17A of folders is stored, as shown in Fig. 2, in association with the access control list 17B of files in each individual folder, in the access control list setter 17.

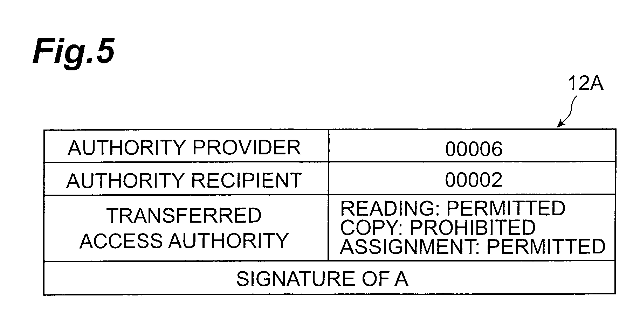

Fig. 5 shows an example of authority transfer certificate data 12A. As shown in this Fig. 5, the authority transfer certificate data 12A includes an ID of an IC card as an authority provider (ID "00006" of the IC card A herein), an ID of an IC card as an authority recipient (ID "00002" of the IC card B herein), a transferred access authority to indicate transferred contents ("reading: permitted", "copy: prohibited", "assignment: permitted" herein), and a signature of the authority provider (signature of IC card A herein).

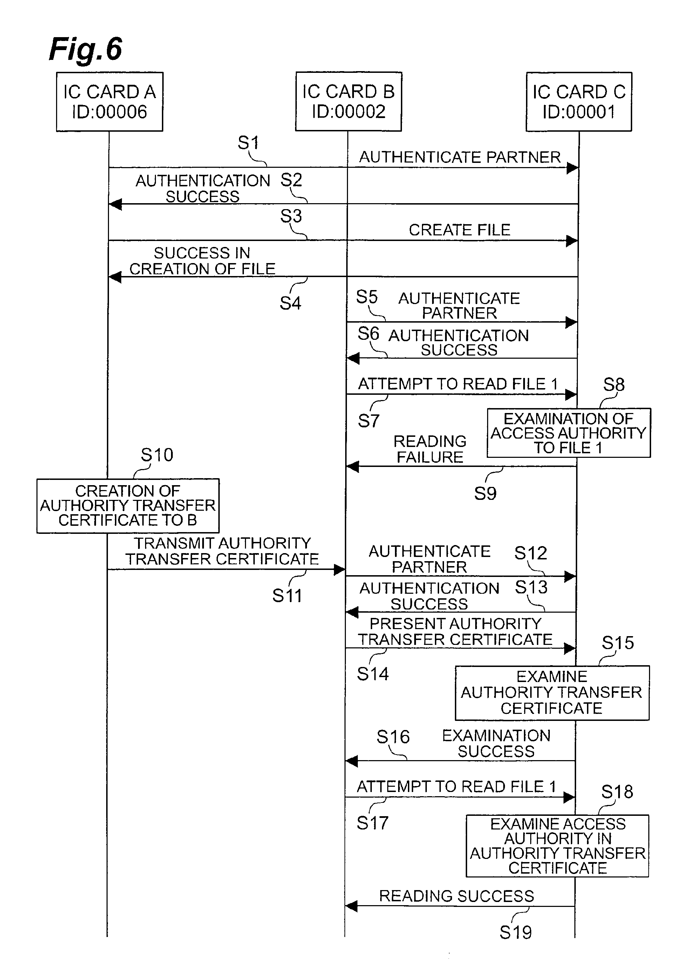

A specific flow of processing will be described below along the chart diagram of Fig. 6 in the case where the IC card A operates as a voucher issuer, the IC card B as a voucher recipient, and the IC card C as a voucher creator.

First, S1 to S4 in Fig. 6 will be described as a first phase of processing wherein the IC card A (voucher issuer) requests the IC card C (voucher creator) to create file 1 in the IC card C.

Specifically, S1 is to mutually present ID certificates between IC cards A, C and to perform mutual authentication according to the conventionally known scheme of PKI. When the authentication is successful (S2), the IC card A transmits a file creation request for creation of file 1 and an access authority setting request for file 1, to the IC card C (S3). Receiving them, the IC card C makes the file creator 16 create and retain file 1 and makes the access control list setter 17 set an access control list of file 1, in response to the requests.

Let us assume herein, for example, that the IC card C created the file 1 in folder 1 containing existing file 2. As shown in Fig. 3, the access control list of folder 1 is set as "reading: permitted", "creation: permitted", and "assignment: permitted". As shown in Fig. 4, the access control list of file 1 is assumed to be set as "copy: prohibited" and "assignment: prohibited".

After completion of the above file creation and setting of the access control list, the IC card C notifies the IC card A of success in creation of file (S4).

Next, S5 to S9 will be described as a second phase of processing where the IC card B attempts to read file 1 in the IC card C, before transfer of an authority from the IC card A.

Specifically, S5 is to mutually present ID certificates between IC cards B, C and to perform mutual authentication according to the conventionally known scheme of PKI. When the authentication is successful (S6), the IC card B attempts to read file 1 in the IC card C (S7). Specifically, the IC card B transmits a reading request for reading of file 1, to the IC card C. The IC card C, receiving this request, examines the access authority of file 1 and the access authority of folder 1 containing the file 1 (S8). Since the access authority of folder 1 is such that all the operations are "permitted" as described previously, it puts no access restriction on file 1. On the other hand, since the access authority of file 1 is set as "reading: prohibited", as shown in Fig. 4, the examination result at S8 is that "reading of file 1 is prohibited". For this reason, the IC card C notifies the IC card B that reading of file 1 is prohibited, and the reading attempt of file 1 by the IC card B ends in failure (S9).

Finally, S10 to S19 will be described as a third phase of processing where the IC card B attempts to read file 1 in the IC card C, after transfer of an authority from the IC card A.

Specifically, S10 is a step in which the IC card A as an issuer of a voucher (file 1) creates authority transfer certificate data to the IC card B as an authority recipient (S10). It is assumed herein, as shown in Fig. 5, that the access authority to the file 1 is set as "reading: permitted", "copy: prohibited", and "assignment: permitted". Then the IC card A sends the created authority transfer certificate data to the IC card B (S11) and the IC card B retains the authority transfer certificate data in the certificate retainer 12 (cf. Fig. 1).

S 12 is to mutually present ID certificates between IC cards B, C and to perform mutual authentication according to the conventionally known scheme of PKI. When the authentication is successful (S13), the IC card B presents the authority transfer certificate data to the IC card C (S14). The IC card C, receiving the presentation of certificate data, examines the authority transfer certificate data (S 15). When the examination is successful (S 16), the IC card B attempts to read file 1 in the IC card C (S17). Specifically, the IC card B transmits a reading request for reading of file 1, to the IC card C. The IC card C, receiving this request, examines the access authority to file 1 in the authority transfer certificate data, and the access authority to folder 1 containing the file 1 (S 18). Since the access authority to folder 1 is such that all the operations are "permitted" as described above, the access authority puts no access restriction on the file 1. On the other hand, since the access authority to file 1 in the authority transfer certificate data is set as "reading: permitted", as shown in Fig. 5, the examination result at S 18 is that "reading of file 1 is permitted". For this reason, the IC card C permits the IC card B to read the file 1, and the reading attempt of file 1 by the IC card B ends in success (S 19).

In the embodiment of the present invention, as described above, the operation on the file 1 is usually controlled based on the access authority to file 1 preliminarily set, as at S5-S9 in Fig. 6, and, when the examination result of authority transfer certificate data is normal, the operation on the file 1 by the authority recipient (IC card B) is controlled based on the transfer contents of the access authority indicated in the authority transfer certificate data, instead of the preset access authority. This makes it feasible to freely perform the authority transfer of the access authority to the file while maintaining the security (safety) of the entire system, thereby improving the convenience of access to the file.

### Industrial Applicability

The present invention is applicable to any IC card capable of setting an access authority transferable to another party, for a voucher file created inside, and to any authority transfer control method of the access authority, and improves the convenience of access while maintaining the security.

## Claims

1. An IC card comprising:
certificate issuing means for issuing authority transfer certificate data to indicate transfer of a whole or part of an access authority set to a voucher file, to a designated authority recipient;
certificate retaining means for receiving and retaining authority transfer certificate data issued;
certificate presenting means for presenting the authority transfer certificate data in mutual authentication with a party retaining a voucher file;
examining means for, when authority transfer certificate data is presented, examining the presented authority transfer certificate data; and
operation controlling means for, when a result of the examination of the authority transfer certificate data is normal, controlling an operation on the voucher file by the party having presented the authority transfer certificate data, based on a transfer content of an access authority indicated in the authority transfer certificate data.

2. An IC card comprising:
file creating means for, in response to a voucher file creation request from a communication partner, creating a voucher file while defining the communication partner as a voucher issuer;
file access authority setting means for, in response to an access authority setting request from the voucher issuer, setting an access authority to the created voucher file;
certificate issuing means for issuing authority transfer certificate data to indicate transfer of a whole or part of an access authority set in response to its own access authority setting request as a voucher issuer, to a designated authority recipient;
certificate retaining means for receiving and retaining authority transfer certificate data issued by the voucher issuer, as an authority recipient;
certificate presenting means for presenting the retained authority transfer certificate data, as the authority recipient, in mutual authentication with a voucher creator having created a voucher file;
authenticating means for performing mutual authentication with an authority recipient, as a voucher creator, and for examining authority transfer certificate data presented by the authority recipient; and
operation controlling means for controlling an operation on the voucher file, based on the set access authority to the voucher file, and for, when a result of the examination of the authority transfer certificate data is normal, controlling the operation on the voucher file by the authority recipient, based on a transfer content of an access authority indicated in the authority transfer certificate data, instead of the aforementioned set access authority.

3. An IC card comprising:
file creating means for, in response to a voucher file creation request from a communication partner, creating a voucher file while defining the communication partner as a voucher issuer;
file access authority setting means for, in response to an access authority setting request from the voucher issuer, setting an access authority to the created voucher file;
authenticating means for performing mutual authentication with an authority recipient to which the voucher issuer transferred a whole or part of the access authority to the voucher file and for examining authority transfer certificate data to indicate a content of the transfer, presented by the authority recipient; and
operation controlling means for controlling an operation on the voucher file, based on the set access authority to the voucher file, and for, when a result of the examination of the authority transfer certificate data is normal, controlling the operation on the voucher file by the authority recipient, based on the transfer content of the access authority indicated in the authority transfer certificate data, instead of the aforementioned set access authority.

4. An authority transfer control method comprising:
a file creating step wherein, in response to a voucher file creation request from a communication partner, an IC card as a voucher creator creates a voucher file in the IC card while defining the communication partner as a voucher issuer;
a file access authority setting step wherein, in response to an access authority setting request from the voucher issuer, the voucher creator sets an access authority to the created voucher file;
a certificate issuing step wherein the voucher issuer issues authority transfer certificate data to indicate transfer of a whole or part of the access authority set in response to its own access authority setting request, to a designated authority recipient;
a certificate retaining step wherein the authority recipient receives and retains the issued authority transfer certificate data;
a certificate presenting step wherein the authority recipient presents the retained authority transfer certificate data in mutual authentication with the voucher creator;
a certificate examining step wherein the voucher creator examines the presented authority transfer certificate data in mutual authentication with the authority recipient; and
an operation controlling step wherein, when a result of the examination of the authority transfer certificate data is normal, the voucher creator controls an operation on the voucher file of the voucher issuer by the authority recipient, based on a transfer content of the access authority indicated in the authority transfer certificate data, instead of the set access authority.
